# EUROPÄISCHE PATENTANMELDUNG

(11) **EP 1 213 073 A2**
(43) Veröffentlichungstag der Anmeldung: **12.06.2002**
(21) Anmeldenummer: 01116372.2
(22) Anmeldetag: 06.07.2001
(51) Int. Cl.: B23B 31/117, B23Q 11/14

(54) **Spannzylinder**

(30) Priorität: 16.08.2000 DE 10039744
(71) Anmelder: Hueck Folien GmbH & Co. KG, 92712 Pirk (DE)
(72) Erfinder: Helm, Ferdinand, 92637 Weiden (DE); Stahl, Hubert, 92727 Waldthurn (DE)
(74) Vertreter: Schneck, Herbert, Dipl.-Phys., Dr.

(57) **Zusammenfassung**

Bei einem Spannzylinder zur Aufnahme und Befestigung einer zylindrischen Prägeform mit einer strukturierten Oberfläche, z.B. zum Herstellen von Hologrammen, umfassend einen äußeren Zylindermantel, der mittels stirnseitiger Deckel verschlossen und auf einer Welle gelagert ist, ist vorgesehen, daß der Zylindermantel (1) mit einer Mehrzahl von Bohrungen (23) versehen ist, die mit durch das Innere des Zylindermantels (1) führende Druckluftleitungen (22) verbunden sind, die ihrerseits an eine Druckluftquelle anschließbar sind, und im Inneren des Zylindermantels (1) ein Hohlraum für ein Temperiermedium, welches über Zu- und Auslaßleitungen (Hohlräume 6, 6a, 8) umgewälzt wird, vorgesehen ist.

## Beschreibung

Die Erfindung richtet sich auf einen Spannzylinder zur Aufnahme und Befestigung einer zylindrischen Prägeform mit strukturierten Oberfläche, z.B. zur Herstellung von Hologrammen, Cinegrammen, Exelgrammen für die Sicherheitstechnik oder für dekorative Zwecke, umfassend einen äußeren Zylindermantel, der mittels stirnseitiger Deckel verschlossen und auf einer Welle gelagert ist.

Es ist bekannt, den Prägevorgang durch eine externe Wärmezufuhr zu begleiten, beispielsweise um ein Aushärten der geprägten Struktur zu ermöglichen oder zu beschleunigen.

Demgegenüber liegt der Erfindung die Erkenntnis zugrunde, daß eine erhebliche Verbesserung der Arbeitsergebnisse dadurch erreicht werden kann, daß die Prägeform als solche auf eine als optimal ermittelte Temperatur gebracht wird.

Hiervon ausgehend liegt der Erfindung die Aufgabe zugrunde, einen Spannzylinder so auszugestalten, daß eine derartige Temperierung der Prägeform realisierbar ist, wobei gleichzeitig eine einfache Befestigung und Justierung der Prägeform am Spannzylinder möglich sein sollen.

Diese Aufgabe wird erfindungsgemäß dadurch gelöst, daß der Zylindermantel mit einer Mehrzahl von Bohrungen versehen ist, die mit durch das Innere des Zylindermantels führenden Druckluftleitungen verbunden sind, die ihrerseits an eine Druckluftquelle anschließbar sind, und im Inneren des Zylindermantels ein Hohlraum für ein Temperiermedium, welches über Zu- und Auslaßleitungen umgewälzt wird, vorgesehen ist.

Aufgrund der erfindungsgemäßen Ausgestaltung ist es möglich, den Spannzylinder und damit die Prägeform sowohl zu kühlen als auch zu heizen und damit also eine gewünschte, vorgegebene Temperatur einzustellen. Über die Steuerung der Druckluftzufuhr ist es möglich, die Prägeform durch elastische Aufweitung in einer beliebigen Position festzulegen oder die Position zu korrigieren.

In weiterer Ausgestaltung der Erfindung ist vorgesehen, daß die Druckluftleitungen den Hohlraum für das Temperiermedium durchsetzen, wodurch ein kompakter, kostengünstiger Aufbau realisierbar ist.

Die Druckluft kann durch Verteilungsleitungen zugeführt werden, die in einem der den Zylindermantel abschließenden Deckel ausgebildet sein können.

Vorteilhafterweise ist die Welle als Hohlwelle ausgebildet und weist einen Hohlraum zur Zuführung und einen Hohlraum zur Abführung des Temperiermediums auf.

An dem Ende der Welle, welches dem Deckel für die Druckluftzuführung gegenüberliegt, ist mit Vorteil eine Zwei-Wege-Einführung angeordnet, um das Temperiermedium zuzuführen und abzuleiten.

Nachfolgend wird die Erfindung anhand eines bevorzugten Ausführungsbeispiels in Verbindung mit der Zeichnung näher erläutert. Dabei zeigen:
- Fig. 1: einen Längsschnitt durch einen erfindungsgemäßen Spannzylinder,
- Fig. 2: eine vergrößerte Schnittdarstellung des linken Zentralbereiches in Fig. 1,
- Fig. 3: eine vergrößerte Darstellung des rechten Zentralbereiches in Fig. 1 und
- Fig. 4: eine vergrößerte Schnittdarstellung des rechten Außenbereiches in Fig. 1.

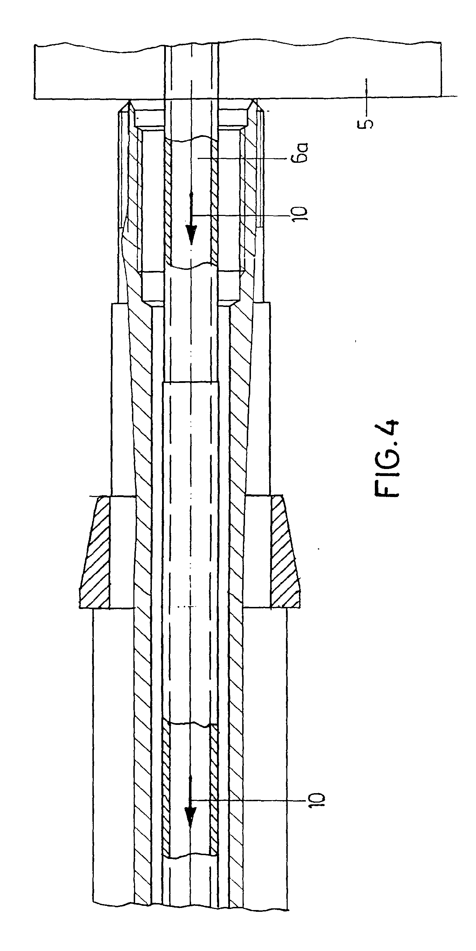

Ein erfindungsgemäßer, in der Zeichnung dargestellter Spannzylinder umfaßt einen Zylindermantel 1 zur Befestigung einer in der Zeichnung nicht dargestellten Prägeform, wobei der Zylindermantel 1 mit stirnseitigen Dekkeln 2, 3 versehen ist, welche von einer drehbar gelagerten Welle 4 durchsetzt werden. In Fig. 4 ist rechts die Befestigung der Stopfbuchse 5 in der Welle erkennbar, ansonsten sind Lager nicht eingezeichnet.

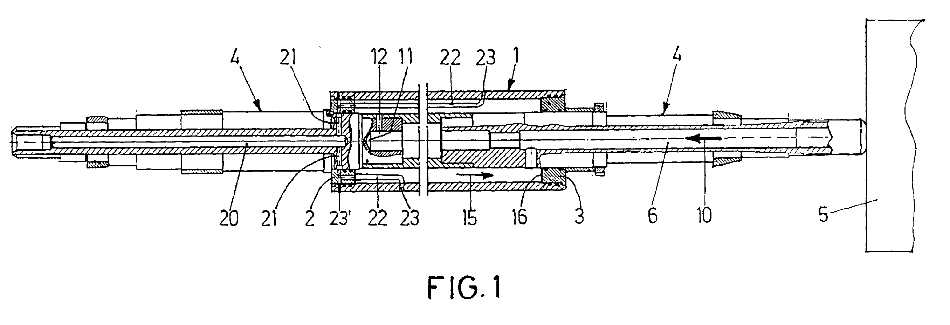

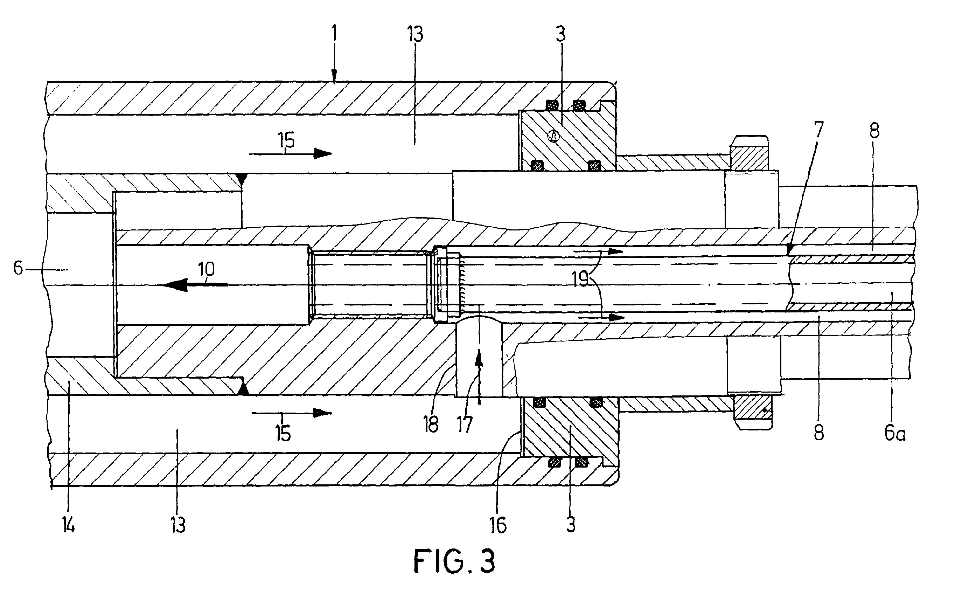

Die Welle 4 weist einen inneren Hohlraum 6 auf, wobei auf der in Fig. 1 rechten Seite (vgl. Fig. 3) durch ein Zuführungsrohr 7 (in Fig. 1 nicht dargestellt) ein weiterer Hohlraum 8 zur Welle 4 ausgebildet ist, wodurch eine kontinuierliche Zirkulation des Temperiermediums gewährleistet ist. Am rechten äußeren Ende der Welle 4 ist eine kommerziell verfügbare, an sich bekannte Zwei-Wege-Einführung (Stopfbuchse 5) vorgesehen (z.B. erhältlich bei DEUBLIN GmbH .

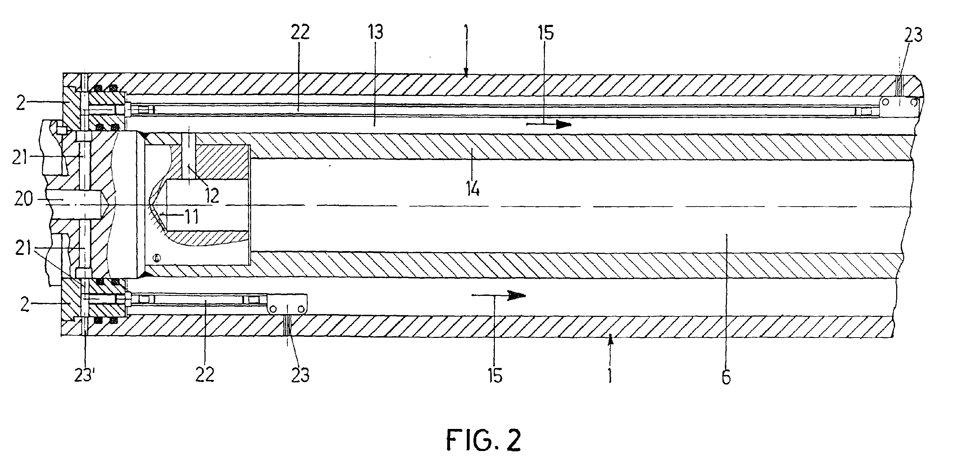

Dementsprechend ist es möglich, ein Temperiermedium, insbesondere Wasser, durch das Zuführungsrohr 7, den inneren Hohlraum 6a sowie den inneren Hohlraum 6 der Welle 4 in Richtung der Pfeile 10 durch die Welle 4 zu leiten, und zwar bis zu dem in Fig. 2 dargestellten stirnseitigen Ende 11 des inneren Hohlraums 6, von welchem sich Kanäle 12 radial nach außen erstrecken und in einen Hohlraum 13 münden, der zwischen dem zentralen Abschnitt 14 der Welle 4 und dem Zylindermantel 1 ausgebildet ist. Dort fließt das Temperiermedium den Zylindermantel 1 temperierend in Richtung der Pfeile 15 zurück, bis es die Stirnwand 16 des Deckels 3 erreicht, um von diesem Bereich in Richtung des Pfeils 17 durch radiale Bohrungen 18 in den Hohlraum 8 zu gelangen, wo es in Richtung der Pfeile 19 in der Welle 4 zurückgeführt wird.

Es ist dementsprechend möglich, mittels eines in der Zeichnung nicht dargestellten Temperatursensors und einer Regelung den Zylindermantel 1 des Spannzylinders auf einer gewünschten, vorgegebenen Temperatur zu halten.

Die Positionierung der Prägeform an der Außenseite des Zylindermantels wird durch Druckluft bewerkstelligt, die in den Zwischenraum zwischen der Außenseite des Zylindermantels 1 und der Innenseite der den Zylindermantel 1 umgebenden Prägeform von der in der Zeichnung linken Seite her zugeführt wird, wie in Fig. 1 dargestellt.

Die Druckluft wird von links durch den Hohlraum 20 eingeführt und durch radiale Bohrungen 21 nach außen umgelenkt, welche in der Welle 4 und dem Deckel 2 ausgebildet sind. In dem Deckel 2 wird die Druckluft auf die Bohrungen 23' und die Leitungen 22, wie in Fig. 2 dargestellt, verteilt. Die Leitungen 22 verlaufen mit unterschiedlicher axialer Erstreckung in dem Hohlraum 13. Am Ende jeder der derartigen Leitungen 22 (vgl. insbesondere Fig. 2) ist eine radiale Bohrung 23 im Zylindermantel 1 vorgesehen.

Durch durch die Bohrungen 23, 23' (vgl. Fig. 2) ausströmende Druckluft wird die Prägeform im elastischen Bereich aufgeweitet und kann dann über ein Luftpolster auf den Spannzylinder aufgeschoben bzw. dort in ihrer Position korrigiert werden. Das Festlegen erfolgt durch das radiale Zusammenziehen der Prägeform nach dem Abschalten der Druckluftzufuhr.

## Patentansprüche

1. Spannzylinder zur Aufnahme und Befestigung einer zylindrischen Prägeform mit einer strukturierten Oberfläche, z.B. zum Herstellen von Hologrammen, umfassend einen äußeren Zylindermantel, der mittels stimseitiger Deckel verschlossen und auf einer Welle gelagert ist, **dadurch gekennzeichnet, daß**
- der Zylindermantel (1) mit einer Mehrzahl von Bohrungen (23, 23') versehen ist, die wenigstens teilweise mit durch das Innere des Zylindermantels (1) führende Druckluftleitungen (22) verbunden sind, die ihrerseits an eine Druckluftquelle anschließbar sind, und
- im Inneren des Zylindermantels (1) ein Hohlraum (13) für ein Temperiermedium, welches über Zu- und Auslaßleitungen (Hohlräume 6, 6a, 8) umgewälzt wird, vorgesehen ist.

2. Spannzylinder nach Anspruch 1, **dadurch gekennzeichnet, daß** die Druckluftleitungen (22) den Hohlraum (13) für das Temperiermedium durchsetzen.

3. Spannzylinder nach Anspruch 1, **dadurch gekennzeichnet, daß** die Druckluft durch Verteilungsleitungen (21) zugeführt wird, die in einem der den Zylindermantel (1) abschließenden Deckel (2) ausgebildet sind.

4. Spannzylinder nach Anspruch 1, **dadurch gekennzeichnet, daß** die Welle (4) als Hohlwelle ausgebildet ist und einen Hohlraum (6, 6a) zur Zuführung und einen Hohlraum (8) zur Abführung des Temperiermediums aufweist.

5. Spannzylinder nach Anspruch 1, **dadurch gekennzeichnet, daß** an dem Ende der Welle (4), welches dem Deckel (2) für die Druckluftzuführung gegenüberliegt, eine Zwei-Wege-Einführung (5) angeordnet ist.
